# EUROPEAN PATENT APPLICATION

(11) **EP 4 575 326 A1**
(43) Date of publication of application: **25.06.2025**
(21) Application number: 23219903.4
(22) Date of filing: 22.12.2023
(51) Int. Cl.: F24D 3/12, F24D 3/14

(54) **UNDERFLOOR HEATING SYSTEM, INSULATION STRIP AND METHOD FOR MANUFACTURING AN UNDERFLOOR HEATING SYSTEM**

(71) Applicant: Uponor Innovation AB, 737 61 Virsbo (SE)
(72) Inventor: TONTERI, Jukka, 15561 Nastola (FI); HEINO, Juha, 15561 Nastola (FI); LIPINSKI, Johann, 22415 Hamburg (DE)
(74) Representative: Fenner, Seraina

(57) **Abstract**

The invention relates to an underfloor heating system (UHS) comprising
- a underfloor heating panel (UHP),
- underfloor heating distribution pipes (DP) and
- underfloor heating pipes (HP) which are located above the top surface of the underfloor heating panel (UHP).

The underfloor heating panel comprises grooves (G),
wherein underfloor heating distribution pipes (DP) are in the grooves (G) and the underfloor heating distribution pipes (DP) are covered by an insulation strip (IS).

The invention also relates to insulation strip (IS) and method for manufacturing an underfloor heating system (UHS).

## Description

The invention relates to an underfloor heating system comprising an underfloor heating panel, underfloor heating distribution pipes and underfloor heating pipes which are located above the top surface of the underfloor heating panel.

Such a system is known, for example, from document DE 10 2017 129 823 B4. In this system the underfloor distribution pipes are arranged in the level of the underfloor heating panel. The underfloor heating panel comprises a cutout for the underfloor distribution pipes and the underfloor distribution pipes are surrounded in this cutout by insulation material in the thickness of the underfloor heating panel.

Underfloor heating systems generally have the problem that close to the manifold box there are a lot of underfloor heating distribution pipes and underfloor heating pipes located in a small area because all these pipes need to be connected to the manifold box. This leads to a hot spot in front of the manifold box the so called the manifold zone.

This increased heat dissipation should be avoided. Especially, the energy saving regulation EnEV in Germany requests measures to reduce the heat dissipation in the manifold zone.

It is an object of the present invention to provide a effective and flexible solution how heat dissipation in the manifold zone can be reduced.

According to the present invention the underfloor heating panel comprises grooves, wherein underfloor heating distribution pipes are in the grooves and the underfloor heating distribution pipes are covered by an insulation strip.

This solution has the advantage that for the arrangement of the underfloor heating distribution pipes in the level of the underfloor heating panel no cutout in the underfloor heating panel is necessary and, instead, the underfloor heating distribution pipes can be inserted in the grooves of the underfloor heating panel.

The grooves in the underfloor heating panel are deep but there is still material of the underfloor heating panel left on the bottom side of the grooves. After inserting the underfloor heating distribution pipes in the grooves, the underfloor heating distribution pipes are covered by an insulation strip.

By inserting the underfloor heating distribution pipes into the grooves and covering the underfloor heating distribution pipes by an insulation strip, the underfloor heating distribution pipes are fully covered, and heat dissipation is reduced significantly. The system has the further advantage that the underfloor heating distribution pipes and the grooves can be arranged on the construction site in an arrangement which is necessary for the building.

According to a preferred embodiment the insulation strip is fixed in the groove of the underfloor heating panel by press fit.

Alternatively, or additionally, the bottom surface of the insulation strip may be provided with glue. This guarantees that the insulation strip is tightly fixed to the underfloor heating distribution pipe in the underfloor heating panel.

According to a further embodiment of the invention, the depth of the groove and the thickness of the insulation strip are adjusted in such a way that the top surface of the insulation strip in the mounted state is flush with the top surface of the underfloor heating panel. This has the advantage that above the underfloor heating panel a planar surface is achieved, and the underfloor heating pipes can be located above the underfloor heating panel and also above the insulation strip.

According to a further embodiment the depth of the grooves in the underfloor heating panel has a measure so that the underfloor heating distribution pipes in their mounted state are more or less in the middle of the thickness of the underfloor heating panel. By locating the underfloor heating distribution pipes in the middle of the thickness of the underfloor heating panel the maximum insulation is achieved.

According to a further embodiment the groove is u-shaped in its cross-section and adjusted to the diameter of the underfloor heating distribution pipes, so that they are tightly surrounded by the material of the underfloor heating panel.

According to a further embodiment the insulation strip has a convex or semicircular bottom surface, so that it surrounds tightly the top surface of the underfloor heating distribution pipe when it is mounted in the underfloor heating panel.

Apart from the convex or semicircular bottom surface the insulation strip has a rectangular shape in its cross-section, which allows that it can be easily mounted in the underfloor heating panel and a flush planar surface is achieved after mounting the insulation strip in the underfloor heating panel.

It is a further advantage that the insulation strip is made from a flexible PE foam or a similar insulation material which can be cheaply produced by an extrusion process.

According to a further embodiment of the invention, the underfloor heating panel is made from expanded polystyrene foam, so-called EPS. This allows that the underfloor heating pipes are fixed above the surface of the underfloor heating panel by Velcro or tacker or a nub panel which is positioned on top of the underfloor heating panel.

The underfloor heating panels out of EPS are already used as so-called tacker plates or panels for fixing the underfloor heating pipes by tacker needles.

The invention further relates to an insulation strip for an underfloor heating system as described above. The insulation strip could be easily transported in coiled form.

The object of the invention is also solved by a method of producing an underfloor heating system as described above, characterized by the following steps:
- Cutting grooves in an underfloor heating panel,
- inserting underfloor heating distribution pipes into the grooves,
- covering the underfloor heating distribution pipes with insulation strips and
- applying the underfloor heating pipes above the top surface of the underfloor heating panel.

According to a preferred embodiment the grooves in the underfloor heating panel are cut with a hot wire cutting tool on the construction site.

As described above this allows very flexible installation and arrangement of the underfloor heating distribution pipes in the underfloor heating panel as it is necessary according to the construction of the buildings or the location of the manifold box.

Further embodiments and advantages of the invention are disclosed in the claims and in the following description.

An embodiment of the invention is explained in the following drawings.
Figure 1 shows a perspective schematic view of the underfloor heating system,
Figure 2 shows the side view of Figure 1,
Figure 3 shows the coiled insulation strip,
Figure 4 show a schematic cross section of the underfloor heating system in a building,
Figure 5 shows a perspective view of a building with an underfloor heating panel and a hot wire cutting tool, and
Figure 6 shows a perspective view of the underfloor heating panel with inserted underfloor heating distribution pipes and insulation strips.

In the following description the same features in the drawings are marked with the same reference signs.

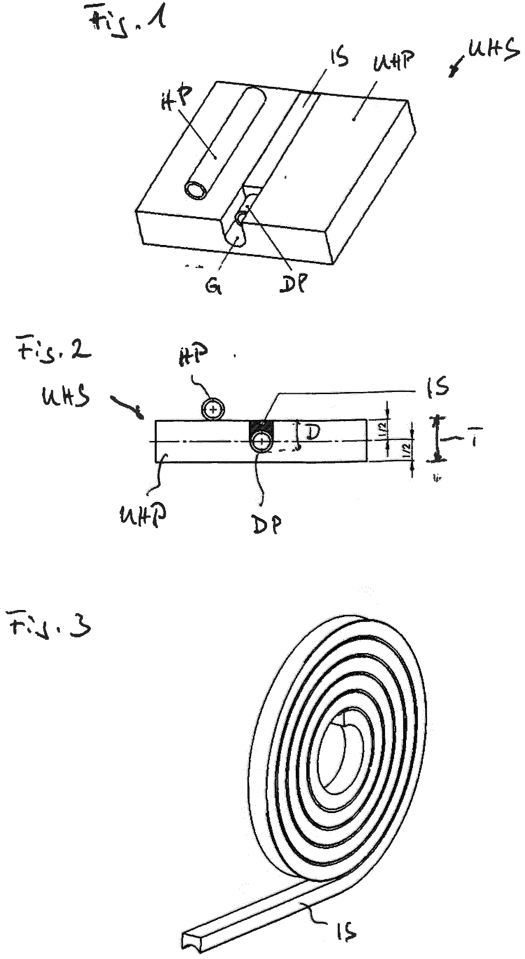

Figure 1 shows a schematic perspective view of the underfloor heating system UHS. The underfloor heating system comprises an underfloor heating panel UHP with a groove G in which an underfloor heating distribution pipe DP is inserted.

The underfloor heating distribution pipe DP is covered by an insulation strip IS in such a way that the underfloor heating distribution pipe DP is fully covered by the underfloor heating panel UHP and the insulation strip IS. On the top surface or above the top surface of the underfloor heating panel UHP, an underfloor heating pipe HP is arranged.

Figure 2 shows a side view of the schematically shown underfloor heating system UHS. The underfloor heating panel has a thickness T, and the depth D of the groove G is measured in such a way that the underfloor heating distribution pipe DP is located in the middle of the thickness T of the underfloor heating panel UHP. The underfloor heating distribution pipe DP is covered by an insulation strip IS, which is positioned above the underfloor heating distribution pipe DP. The insulation strip IS has a convex curved or semicircular bottom surface so that it tightly fits into the surface of the underfloor heating distribution pipe DP.

The insulation strip IS is held in the groove G by press fit or alternatively or additionally by glue which is placed on the bottom surface of the insulation strip. The insulation strip has, apart from the curved or semicircular bottom surface, a rectangular shape. The top surface of the insulation strip IS is in the mounted state flush with the top surface of the underfloor heating panel.

Above the top surface of the underfloor heating panel UHP underfloor heating pipes HP are arranged. These underfloor heating pipes HP can be fixed to the underfloor heating panel UHP by a Velcro or by Tacker with u-shaped tacker needles. A further possibility to fix an underfloor heating pipe HP to the underfloor heating panel is a nub plate, which requires a further mat with nubs in which the underfloor heating pipes HP are fixed.

Figure 3 shows the insulation strip in isolated form. The insulation strip is made of extruded material in an extrusion process, usually PE foam or a similar insulation material. As can be seen from Figure 3, this insulation strip IS could be coiled and easily transported in coiled form. The insulation strip can be provided with glue on the bottom curved or semicircular surface, so that the insulation strip IS can easily be attached to the underfloor distribution pipes DP.

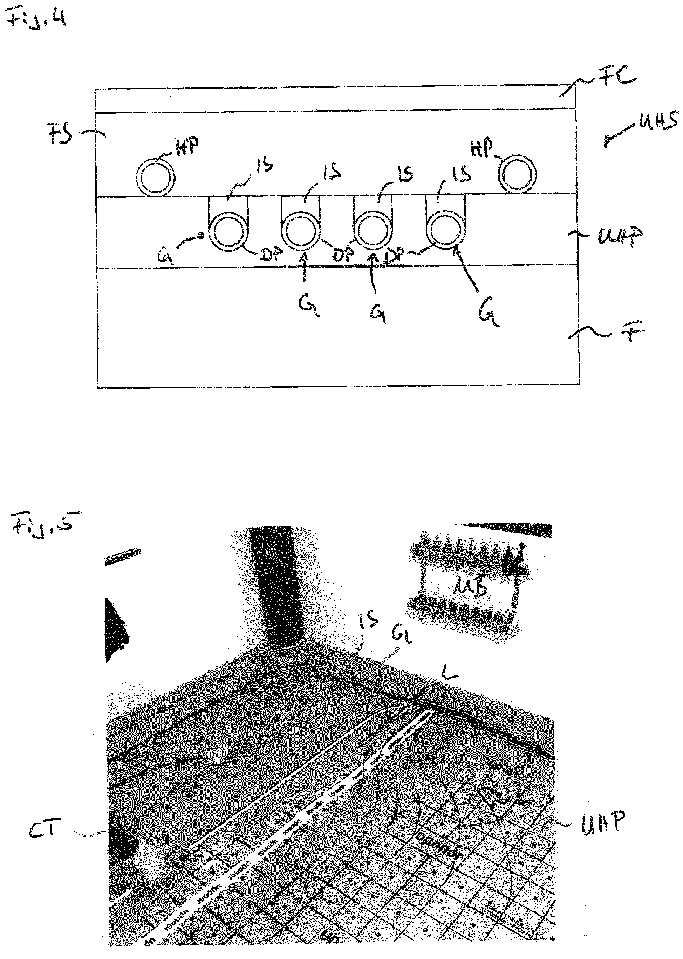

Figure 4 shows a schematic side view of the underfloor heating system UHS in the installed form. The underfloor heating system UHS is installed in a floor F, for example a concrete floor. On this floor F underfloor heating panels UHP are put. After that, u-shaped grooves G are cut into the underfloor heating panels UHP and after that underfloor distribution pipes DP are inserted into these u-shaped grooves G. In Figure 4 four underfloor heating distribution pipes DP are shown, and after they are inserted into the grooves G of the underfloor heating panel UHP they are covered with insulation stripes IS. The top surface of the insulation stripes IS is flush with a top surface of the underfloor heating panel UHP. Above the top surface of the underfloor heating panel UHP, underfloor heating pipes HP (two are shown in Figure 4) are positioned. The underfloor heating pipes HP are fixed by Velcro, Tacker or a nub plate, which is not shown in Figure 4.

Figure 5 shows a perspective view of a room. In this room at one wall a manifold box MB is show. The manifold box MB comprises valves to which the underfloor heating pipes HP and the underfloor heating distribution pipes DP will be connected. In front of the manifold box MB at the floor is a so-called manifold zone MZ. In this manifold zone MZ a lot of pipes needs to be arranged in close distance. The worker already marked with a pen the lines L where the underfloor heating distribution pipes should be inserted into the underfloor heating panel UHP.

On the left side the worker is shown with a hot wire cutting tool CT cutting a groove G. Left from this groove G there is already a groove G with an inserted underfloor heating distribution pipe DP and then covered by an insulation strip IS.

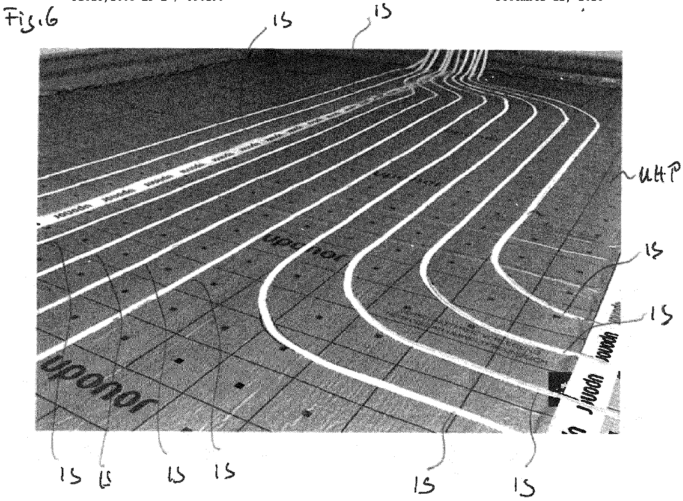

Figure 6 shows a perspective view of the manifold zone MZ in which the grooves are already cut and the underfloor heating distribution pipes DP are already inserted into the grooves G and these underfloor heating distribution pipes DP are already covered by insulation strips IS. On this layer, as shown in Figure 6, the underfloor heating pipes HP can be arranged and fixed as described above by Velcro, Tacker or a nub plate.

With the present invention it is possible to reduce heat dissipation in the manifold zone MZ in front of a manifold box MB by inserting the underfloor heating distribution pipes DP into the underfloor heating panel UHP and covering them by the insulation strip IS.

As this can be done on the construction site it is very flexible for the workers to decide where the grooves G should by cut with the hot wire tool cutting CT into the underfloor heating panel UHP. The invention provides an easy and very effective solution to reduce heat dissipation in the manifold zone MZ.

### List of reference signs

- UHS: underfloor heating system
- UHP: underfloor heating panel
- HP: underfloor heating pipes
- DP: underfloor heating distribution pipes
- G: groove
- IS: isolation strip
- D: depth of the groove
- T: thickness of the underfloor heating panel
- CT: hot wire cutting tool
- MB: manifold box
- MZ: manifold zone
- F: floor
- FS: floor screed
- FC: floor covering
- L: lines

## Claims

1. Underfloor heating system (UHS) comprising
- a underfloor heating panel (UHP),
- underfloor heating distribution pipes (DP) and
- underfloor heating pipes (HP) which are located above the top surface of the underfloor heating panel (UHP),
**characterized in**
**that** the underfloor heating panel comprises grooves (G),
wherein underfloor heating distribution pipes (DP) are in the grooves (G) and the underfloor heating distribution pipes (DP) are covered by an insulation strip (IS).

2. Underfloor heating system (UHS) according to claim 1, **characterized in that** the insulation strip (IS) is fixed in the groove (G) of the underfloor heating panel (UHP) by press fit.

3. Underfloor heating system (UHS)according to claim 1 or claim 2, **characterized in that** the bottom surface of the insulation strip (IS) is provided with glue.

4. Underfloor heating system (UHS) according to at least one of the claims 1 to 3, **characterized in that** the top surface of the insulation strip (IS) in the mounted state is flush with the top surface of the underfloor heating panel (UHP).

5. Underfloor heating system (UHS) according to at least one of the claims 1 to 4 **characterized in that** the grooves (G) in the underfloor heating panel (UHP) have a depth (D) that the underfloor heating distribution pipes (DP) are located in the middle of the thickness of the underfloor heating panel (UHP).

6. Underfloor heating system (UHS) according to any of the preceding claims, **characterized in that** the groove (G) is u-shaped in its cross section.

7. Underfloor heating system (UHS) according to any of the preceding claims, **characterized in that** the insulation strip (IS) has a convex or semicircular bottom surface.

8. Underfloor heating system (UHS) according to any of the preceding claims, **characterized in that** the insulation strip (IS) has, apart from the convex or semicircular bottom surface, a rectangular shape in its cross section.

9. Underfloor heating system (UHS)according to any of the preceding claims, **characterized in that** the insulation strip (IS) is made from flexible PE foam or a similar insulation material.

10. Underfloor heating system (UHS) according to any of the preceding claims, **characterized in that** insulation strip (IS) is produced by an extrusion process.

11. Underfloor heating system (UHS) according to any of the preceding claims, **characterized in that** the underfloor heating pipes (HP) are fixed to the surface of the underfloor heating panel (UHP) by Velcro or Tacker or a nub panel on top of the underfloor heating panel (UHP).

12. Underfloor heating system (UHS) according to any of the preceding claims, **characterized in that** the underfloor heating panel (UHP) is made from expanded polystyrene foam (EPS) .

13. Insulation strip (IS) of an underfloor heating system (UHS) according to any of the preceding claims.

14. Method of producing an underfloor heating system (UHS) according any one of the claims 1 to 12, **characterized by** the following steps:
- cutting grooves (G) in an underfloor heating panel (UHP),
- inserting underfloor heating distribution pipes (DP) into the grooves (G),
- covering the underfloor heating distribution pipes (DP) with insulation strips (IS) and
- applying the underfloor heating pipes (HP) above the top surface of the underfloor heating panel (UHP).

15. Method of producing an underfloor heating system (UHS) according to claim 14, **characterized in that** the grooves (G) in the underfloor heating panel (UHP) are cut with a hot wire cutting tool (CT) at site.
